## Europäisches Patentamt

## European Patent Office

## Office européen des brevets

(11) Publication number: **0 133 979**
**B1**

(12) # EUROPEAN PATENT SPECIFICATION

(45) Date of publication of patent specification: **27.06.90**

(21) Application number: **84108986.5**

(22) Date of filing: **28.07.84**

(51) Int. Cl.⁵: **B 29 C 47/38**, B 29 C 47/60, B 29 B 7/14

(54) Extruder.

(30) Priority: **01.08.83 US 519473**

(43) Date of publication of application:
**13.03.85 Bulletin 85/11**

(45) Publication of the grant of the patent:
**27.06.90 Bulletin 90/26**

(84) Designated Contracting States:
**AT BE CH DE FR GB IT LI NL SE**

(56) References cited:
**US-A-3 449 793**
**US-A-3 762 693**

(73) Proprietor: **The B.F. GOODRICH Company
Dept. 0015 WHB-6 500 South Main Street
Akron, Ohio 44318 (US)**

(72) Inventor: **Heung-Tai, Kim
33339 Lake Road
Avon Lake Ohio 44012 (US)**

(74) Representative: **von Kreisler, Alek, Dipl.-Chem.
et al
Deichmannhaus am Hauptbahnhof
D-5000 Köln 1 (DE)**

Courier Press, Leamington Spa, England.

## Description

The present invention relates to an extruder and more particularly to the feed screw of an extruder.

In the manufacture of thermoplastic materials, the extruder receives the plastic material in its hopper and delivers such materials to a feed screw located in the extruder barrel wherein the feed screw advances and works the plastic materials to produce a homogeneous extrudate. The art of converting solid thermoplastic materials into a satisfactory flowing homogeneous melt without overheating or chemical degradation depends in part on the type of thermoplastic material being worked on. In processing certain plastic materials a plurality of extruder screws can be provided in tandem to provide a continuous mixing and working, wherein the rise in temperature is not critical and the plastic materials can be mixed for a longer period of time without adverse effects. In the case of low shear rigid polyvinyl chloride (PVC) compounds, it was necessary to reduce the output rate in order to maintain the extrudate below 182.2°C (360°F). In addition, only a single flight extruder screw could be used to preserve the properties necessary to achieve a smooth surface on the extrudate. In the patent to Kim (U.S.—A—3,897,938), the structure is such as to expose the maximum amount of the material to be worked on to the cylindrical surface of the barrel for producing a melt. In this type of screw the fluent melt is directed away from the solid portion of the plastic material that is being conveyed via a primary channel and is directed into a secondary channel for collection and advance. In the case of the low shear rigid PVC compounds the processing characteristics are such that this type of screw cannot be used. In processing this material it was necessary to use a standard or conventional single flight mixing screw and to reduce the rate of rotation of the screw to reduce the shear rate of the extrudate and maintain the output temperature below 182.2°C (360°F). In the case of a 88.9 mm (3.5 inch) screw with 5 turns in the feed section with a 17.15 mm (0.675 inch) depth of channel in the feed section, 5 to 7 turns in the transition section, also having 12 to 14 flights or turns in the metering section and 6.35 mm (0.25 inches) depth in the metering section or channel, one would average about 68 kg (150 pounds) per hour of output without encountering chemical degradation or surging. In addition the extrudate would provide profiles with smooth surface finishes. It is important to achieve a homogeneous mix of the melt. This requires a limitation on the melt extrusion temperature to be below 182.2°C (360°F) (using 88.9 mm (3.5 inch) extruder screw of standard or conventional design with a 88.9 mm (3.5 inch) pitch). The present invention is directed to a new and improved screw design of this conventional single flight screw that is able to increase the output rate of low shear rigid PVC up to over 136.1 kg (300 pounds) per hour while achieving a homogeneous mix and maintaining the melt temperature below 182.2°C (360°F) by materially decreasing the pitch at the metering section, increasing the depth at such metering section while employing a plurality of rows of radially extending pins in the metering section.

In US—A—3,762,693 there is disclosed an apparatus of the type stated in the first part of claim 1. In this apparatus, the thermoplastic material enters a compression relief section on its way from a compression section to the metering section, which has a channel depth, which is not increased. The apparatus has a flight pitch, which is constant from the beginning to the end or may be a variable pitch for the entire length but does not have the pitch or structure of the present invention.

The object of the invention is to improve the known apparatus according to US—A—3,762,693 so as to increase the output rate without incurring surging of the extrudate.

According to one aspect of the invention, there is provided an apparatus for advancing and working thermoplastic material comprising a cylinder, said cylinder having die means at one end thereof;

a feed screw being rotatably journaled in said cylinder, having first and second ends, having a feed section (A), a transition section (B) and a metering section (C), said metering section (C) having a plurality of circumferentially extending shear rings located along the axial length thereof, and said feed screw having a single helical flight extending from said first end to said second end, said apparatus being characterized in that in the transition section (B) the core diameter of the feed screw increases uniformly towards the downstream end of said transition section,

said flight being of a first constant pitch in said feed (A) and transition (B) sections and of a second constant pitch in said metering section (C), said second constant pitch being smaller than said first constant pitch,

and in that the ratio of the depth of the screw flight of said metering section (C) to the diameter of said feed screw is in the range of 0.07 to 0.09:1.

According to another aspect of the invention, there is provided an extruder feed screw for advancing and working thermoplastic materials having a longitudinally extending core, said core having a helical flight to define a feed screw for advancing material from a rearward portion thereof to a forward portion thereof, said feed screw having a feed section (A) at the rearward portion, a transition section (B) at an intermediate portion and a metering section (C) at said forward portion, said metering section (C) of said feed screw having a plurality of axially spaced shear rings, all of said shear rings lying in planes that are normal to the axial rotational center line of said feed screw, said extruder feed screw being characterized in that in the transition section (B) the core diameter of the feed screw increases uniformly towards the downstream end of said transition section, said flight being of a first constant pitch in said feed (A) and transition (B) sections and of a second constant pitch in said metering section (C) said second constant pitch being smaller than said first constant pitch, and in that the ratio of the depth of the screw flight (22) of said metering section (C) to the diameter of said feed screw is in the range of 0.07 to 0.09:1.

Fig. 1 is a diagramatic side elevational view of an extruder apparatus showing the extruder screw in dotted lines.

Fig. 2 is an enlarged side elevational view of the extruder screw located within the extruder barrel which has been broken away.

Fig. 3 is a chart comparing the output rates of different screw flights.

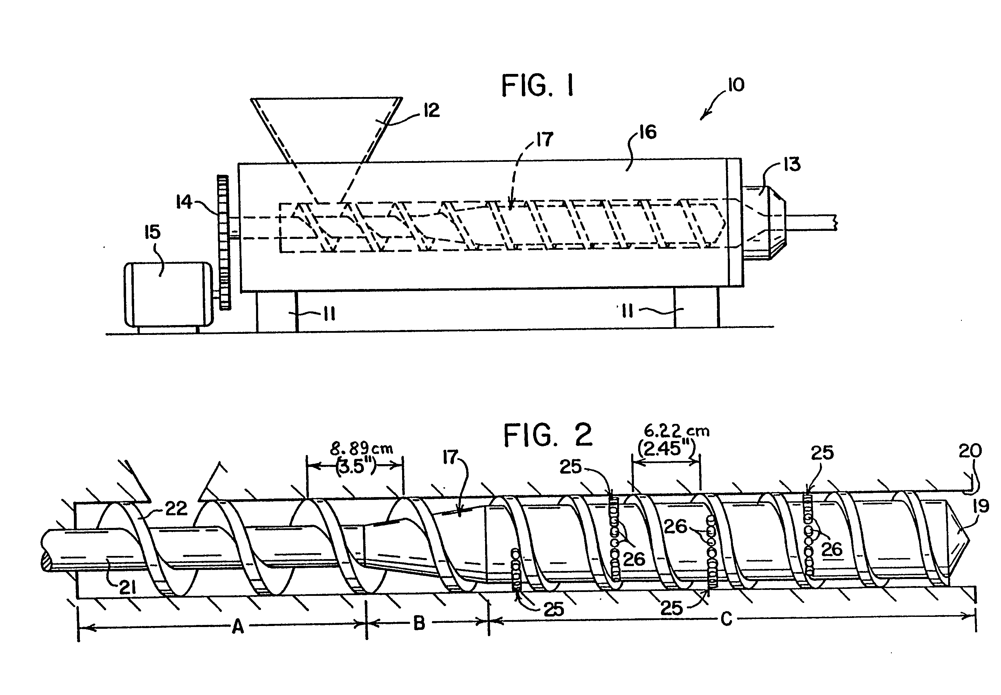

Referring to the drawings, wherein like reference characters designate like or corresponding parts throughout the several views, there is shown in Fig. 1 an extruder 10 supported by a pair of spaced brackets 11. Extruder 10 has a hopper 12, an extruder die 13, transmission means 14, drive motor 15 and a cylinder 16 in which a feed screw 17 is journaled for rotation. The feed screw has a feed section A, a transition section B, and a metering section C that terminates adjacent to the die 13. The extruder screw 17 is shown as driven by the transmission means 14 with its tip 19 situated upstream of an outlet 20 which outlet 20 is connected to the die 13. The core 21 of the screw 17 has a helical land or flight 22 of a constant pitch for the entire length of the feed section A and the transition section B. As seen in Fig. 2, the diameter of the core increases in radial dimension towards the end of the transition section to where it joins the metering section.

The core diameter of the metering section is reduced in comparison to a standard 88.9 mm (3.5 inch) screw which would ordinarily have an adverse effect on the melts homogenity since it would cause surging in the extrudate. Surging is an uneven flow or pumping action and causes an uneven residence time of the material within the extruder. The depth of the channel in the metering section is increased to a depth having a range of 7.1 to 7.6 mm (0.28 to 0.30 inches) while also reducing the pitch of the screw to approximately 62.2 mm (2.45 inches) from a 88.9 mm (3.5 inches). By the pitch of the screw, or screw pitch is meant the longitudinal distance between two adjacent flights. Located on the metering section of the screw 17 are a plurality of mixing or shear rings 25. Each ring 25 comprises a plurality of cylindrical pins 26 suitably secured in holes drilled into the shank or core 21 of the screw. Each ring 25 lies in a plane which is perpendicular to the axial center line of the screw. The pins 26 are symmetrically arranged circumferentially around the core or shank 21 and extend outwardly to a distance coinciding with the screw flight diameter. The pins do not intersect the flights but are arranged to terminate closely adjacent to the screw flights. Such pins add to the effectiveness in mixing and thermal uniformity before the extrudate is carried or moved forward by the next screw flight to the succeeding mixing ring 25.

With the successive mixing by such rings 25, and by increasing the metering depth, the shear rate and the shear heating is reduced thus lowering the melt temperature but this increases the pumping action and surge. By also shortening the pitch in the metering section with these above modifications the pumping action is reduced and the residence time is increased thus improving quality. This combined structures eliminates surging of the material within the extruder and the extrudate issues from the die head thoroughly mixed, having the heat distributed throughout the material so that the material is homogenized with respect to temperature while materially increasing the output rate. In comparing the output rate of such described extruder screw, one achieves an output of between 136.1 to 181.4 kg (300 to 400 pounds) per hour compared to the conventional mixing screw getting 68.0 to 90.7 kg (150 to 200 pounds) per hour while maintaining lower melt temperature (below 182.2°C (360°F)).

In the operation of the above described extruder, the low shear PVC material being processed moves up the feed section of the feed screw 17 by the pumping action of the flights 22, being further worked and heated as it moves through the transition section B. As the material enters the metering section, which is deeper than the conventional depth of a metering section, the extrudate being worked is moved through the slots between the pins which disperses the solids and provides a mixing action to the PVC material in the channel. As the material moves through the metering section, the PVC worked material is given a longer residency time within the channel. A more efficient working action on the material is provided due to the action of the material moving through the slits between the pins along with the increased residency time within the channel because of the deeper metering channel and lower pitch thereon thus providing a homogeneous mix as it issues from the extrudate while maintaining a temperature of 182.2°C (360°F) or lower without incurring surging of the extrudate.

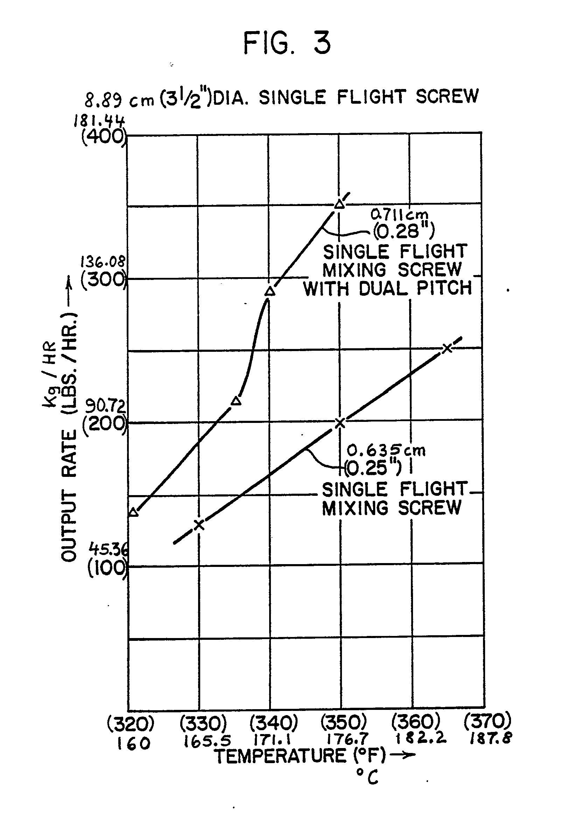

As an example of the difference in output rates, note Fig. 3 which discloses the use of a 88.9 mm (3.5 inch) diameter single flight screw having a feed section transition section and a metering section with a 88.9 mm (3.5 inch) pitch throughout. The standard 88.9 mm (3.5 inch) diameter mixing screw with a screw length to diameter ratio of 24, having a metering depth of 6.35 mm (0.25 inches) and 4 rows of mixing pins in the metering section has a substantially linear curve designated by "X"s. Using a BFGoodrich Geon 8700A compound, considered a low shear rigid compound, provides an output of up to 113.4 kg (250 pounds)/hour with a temperature of 185°C (365°F). The quality of such extrudate is borderline because of its high melt temperature. Using an identical screw and operating under the same conditions but modifying the screw in accordance with the principles of decreasing the pitch of the metering section from 88.9 mm (3.5 inches) to 62.2 mm (2.45 inches) and increasing the depth of the metering section to 7.1 mm (0.28 inches) the output rate is increased to 158.8 kg (350 pounds) per hours at 176.7°C (350°F) temperature. In this latter run there was no surging with a corresponding improvement in quality of the extrudate.

Various modifications are contemplated and may obviously be resorted to by those skilled in the art without departing from the described invention at hereinbefore defined by the appended claims, as only a preferred embodiment thereof has been disclosed.

## Claims

1. An apparatus (10) for advancing and working thermoplastic material comprising

a cylinder (16), said cylinder (16) having die means (13) at one end thereof;

a feed screw (17) being rotatably journaled in said cylinder (16), having first and second ends, having a feed section (A), a transition section (B) and a metering section (C), said metering section (C) having a plurality of circumferentially extending shear rings (25) located along the axial length thereof, and said feed screw having a single helical flight (22) extending from said first end to said second end, said apparatus (10) being characterized in that in the transition section (B) the core diameter of the feed screw (17) increases uniformly towards the downstream end of said transition section,

said flight (22) being of a first constant pitch in said feed (A) and transition (B) sections and of a second constant pitch in said metering section (C), said second constant pitch being smaller than said first constant pitch,

and in that the ratio of the depth of the screw flight (22) of said metering section (C) to the diameter of said feed screw (17) is in the range of 0.07 to 0.09:1.

2. An apparatus according to claim 1 wherein the ratio of said second constant pitch to said first constant pitch is 0.7 to 0.9:1.

3. An apparatus according to claims 1 and 2, wherein each of said shear rings (25) has a plurality of circumferentially spaced pins (26) extending radially outwardly from said feed screw (17), and said pins (26) in each ring lie in planes that are normal to the axial center line of rotation of said feed screws (17).

4. An apparatus according to claims 1 to 3, wherein said feed screw (17) has a diameter of 88.9 mm (3.5 inches), said second pitch is 71.1 mm (2.8 inches), and said first pitch is 88.9 mm (3.5 inches).

5. An apparatus according to claims 1 to 4, wherein said channel depth of the metering section (C) is between 7.1 mm (0.28 inches) and 7.6 mm (0.30 inches).

6. An extruder feed screw (17) for advancing and working thermoplastic materials having a longitudinally extending core (21), said core (21) having a helical flight (22) to define a feed screw (17) for advancing material from a rearward portion thereof to a forward portion thereof, said feed screw (17) having a feed section (A) at the rearward portion, a transition section (B) at an intermediate portion, and a metering section (C) at said forward portion, said metering section (C) of said feed screw (17) having a plurality of axially spaced shear rings (25), all of said shear rings (25) lying in planes that are normal to the axial rotational center line of said feed screw (17), said extruder feed screw (17) being characterized in that in the transition section (B) the core diameter of the feed screw (17) increases uniformly towards the downstream end of said transiton section,

said flight (22) being of a first constant pitch in said feed (A) and transition (B) sections and of a second constant pitch in said metering section (C),

said second constant pitch being smaller than said first constant pitch,

and in that the ratio of the depth of the screw flight (22) of said metering section (C) to the diameter of said feed screw (17) is in the range of 0.07 to 0.09:1.

7. An extrusion feed screw according to claim 6, wherein each of said shear rings (25) has a plurality of circumferentially spaced pins (26) extending radially outwardly from said feed screw (17).

8. An extrusion feed screw according to claims 6 and 8, wherein said second constant pitch is in the range of 62.2 to 81.3 mm (2.45 to 3.20 inches), and said first constant pitch is in the range of 81.3 to 91.4 mm (3.20 to 3.60 inches).

9. An extrusion feed screw according to claims 6 to 8, wherein the depth of a channel defined by the flight (22) in said metering section (C) has a range of 6.86 to 8.13 mm (0.27 to 0.32 inches), and the diameter of said feed screw (17) is 88.9 mm (3.5 inches).

## Patentansprüche

1. Apparat (10) zum Fördern und Bearbeiten eines thermoplastischen Materials, umfassend einen Zylinder (16), der an seinem einen Ende eine Düsenvorrichtung (13) aufweist,

eine Speiseschnecke (17), die in dem Zylinder (16) drehbar gelagert ist, ein erstes und ein zweites Ende besitzt, einen Speise-Abschnitt (A), einen Übergangs-Abschnitt (B) und einen Bemessungs-Abschnitt (C) besitzt, wobei der Bemessungs-Abschnitt (C) eine Mehrzahl von Scherungsringen (25), die sich in Umfangsrichtung erstrecken und entlang der axialen Länge desselben angeordnet sind, aufweist und die Speiseschnecke einen einzigen Schraubengang (22) besitzt, der vom genannten ersten zum genannten zweiten Ende verläuft,

wobei der Apparat (10) dadurch gekennzeichnet ist, daß in dem Übergangs-Abschnitt (B) der Kern-Durchmesser der Speiseschnecke (17) gleichmäßig in Richtung zum stromabwärts gelegenen Ende des Übergangs-Abschnitts hin zunimmt,

der Gang (22) eine erste konstante Gangsteigung in dem Speise-Abschnitt (A) und dem Übergangs-Abschnitt (B) und eine zweite konstante Gangsteigung in dem Bemessungs-Abschnitt (C) besitzt, wobei die zweite konstante Gangsteigung kleiner als die erste konstante Gangssteigung ist, und

das Verhältnis der Tiefe des Schneckengangs (22) des Bemessungs-Abschnitts (C) zu dem Durchmesser der Speiseschnecke (17) im Bereich von 0,07 bis 0,09:1 liegt.

2. Apparat nach Anspruch 1, worin das Verhältnis der zweiten konstanten Gangsteigung zu der ersten konstanten Gangsteigung 0,7 bis 0,9:1 beträgt.

3. Apparat nach den Ansprüchen 1 und 2, worin jeder der Scherungsringe (25) eine Mehrzahl von Stiften (26) aufweist, die in einem gewissen Abstand voneinander in der Umfangsrichtung angebracht sind und sich radial von der Speiseschnecke (17) nach außen erstrecken, und die genannten Stifte (26) in jedem Ring in Ebenen liegen, die zu der axialen Mittellinie der Rotation der Speiseschnecke (17) normal sind.

4. Apparat nach den Ansprüchen 1 bis 3, worin die Speiseschnecke (17) einen Durchmesser von 88,9 mm (3,5 inch) besitzt, die zweite Gangsteigung 71,1 mm (2,8 inch) beträgt und die erste Gangsteigung 88,9 mm (3,5 inch) beträgt.

5. Apparat nach den Ansprüchen 1 bis 4, worin die Kanaltiefe des Bemessungs-Abschnitts (C) zwischen 7,1 mm (0,28 inch) und 7,6 mm (0,30 inch) beträgt.

6. Extruder-Speiseschnecke (17) zum Förden und Bearbeiten thermoplastischer Materialen, mit

einem in Längsrichtung verlaufenden Kern (21), wobei der Kern (21) einen Schraubengang (22) besitzt, um eine Speiseschnecke (17) zum Förden von Material von einem rückwärtigen Teil desselben zu einem vorderen Teil desselben zu definieren, wobei die Speiseschnecke (17) einen Speise-Abschnitt (A) am rückwärtigen Teil, einen Übergangs-Abschnitt (B) an einem Zwischenteil und einen Bemessungs-Abschnitt (C) an dem vorderen Teil besitzt, wobei der Bemessungs-Abschnitt (C) der Speiseschnecke (17) eine Mehrzahl von axial in Abständen voneinander angeordneten Scherungsringen (25) aufweist, wobei sämtliche Scherungsringe (25) in Ebenen liegen, die zu der axialen Mittellinie der Rotation der Speiseschnecke (17) normal sind,

wobei die Extruder-Speiseschnecke (17) dadurch gekennzeichnet ist, daß in dem Übergangs-Abschnitt (B) der Kern-Durchmesser der Speiseschnecke (17) gleichmäßig in Richtung zum stromabwärts gelegenen Ende des Übergangs-Abschnitts hin zunimmt,

der Gang (22) eine erste konstante Gangsteigung in dem Speise-Abschnit (A) und dem Übergangs-Abschnitt (B) und eine zweite konstante Gangsteigung in dem Bemessungs-Abschnitt (C) besitzt, wobei die zweite konstante Gangsteigung kleiner als die erste konstante Gangsteigung ist, und

das Verhältnis der Tiefe des Schneckengangs (22) des Bemessungs-Abschnitts (C) zu dem Durchmesser der Speiseschnecke (17) im Bereich von 0,07 bis 0,09:1 liegt.

7. Extrusions-Speiseschnecke nach Anspruch 6, worin jeder der Scherungsringe (25) eine Mehrzahl von Stiften (26) aufweist, die in einem gewissen Abstand voneinander in der Umfangsrichtung angebracht sind und sich radial von der Speiseschnecke (17) nach außen erstrecken.

8. Extrusions-Speiseschnecke nach den Ansprüchen 6 und 8, worin die zweite konstante Gangsteigung im Bereich von 62,2 bis 81,3 mm (2,45 bis 3,20 inch) liegt und die erste konstante Gangsteigung im Bereich von 81,3 bis 91,4 mm (3,20 bis 3,60 inch) liegt.

9. Extrusions-Speiseschnecke nach den Ansprüchen 6 bis 8, worin die Tiefe eines durch den Gang (22) in dem Bemessungs-Abschnitt (C) definierten Kanals einen Bereich von 6,86 bis 8,13 mm (0,27 bis 0,32 inch) hat un der Durchmesser der Speiseschnecke (17) 88,9 mm (3,5 inch) beträgt.

**Revendications**

1. Un appareil (10) destiné à avancer et traiter une matière thermoplastique comprenant

un cylindre (16), ledit cylindre (16) comportant des moyens de filière (13) à une des ses extrémités;

une vis d'alimentation (17), montée à rotation dans ledit cylindre (16), possédant des première et deuxième extrémités, possédant une section d'alimentation (A), une section de transition (B) et une section de dosage (C), ladite section de dosage (C) comportant une pluralité d'anneaux de cisaillement (25) s'étendant circonférentiellement, situés le long de la longueur axiale de cette section, et ladite vis d'alimentation possédant une spire hélicoïdale unique (22) s'étendant depuis ladite première extrémité vers ladite deuxième extrémité, ledit appareil (10) étant caractérisé en ce que, dans la section de transition (B), le diamètre du noyau de la vis d'alimentation (17) augmente uniformément vers l'extrémité aval de ladite section de transition,

ladite spire (22) étant d'un premier pas constant dans lesdites sections d'alimentation (A) et de transition (B) et d'un deuxième pas constant dans ladite section de dosage (C), ledit deuxième pas constant étant plus petit que ledit premier pas constant,

et en ce que le rapport de la profondeur de la spire de vis (22) de ladite section de dosage (C) au diamètre de ladite vis d'alimentation (17) est dans la plage comprise entre 0,07 et 0,09:1.

2. Un appareil selon la revendication 1 dans lequel le rapport dudit deuxième pas constant audit premier pas constant est compris entre 0,7 et 0,9:1.

3. Un appareil selon les revendications 1 et 2, dans lequel chacun des anneaux de cisaillement (25) comporte une pluralité de broches espacées circonférentiellement (26) s'étendant radialement vers l'extérieur à partir de ladite vis d'alimentation (17), et lesdites broches (26) de chaque anneau sont situées dans des plans qui sont normaux à l'axe de rotation de ladite vis d'alimentation (17).

4. Un appareil selon les revendications 1 à 3, dans lequel ladite vis d'alimentation (17) est d'un diamètre de 88,9 mm (3,5 pouces), ledit deuxième pas est de 71,1 mm (2,9 pouces), et ledit premier pas est de 88,9 mm (3,5 pouces).

5. Un appareil selon les revendications 1 à 4, dans lequel ladite profondeur de canal de la section de dosage (C) est comprise entre 7,1 mm (0,28 pouce) et 7,6 mm (0,30 pouce).

6. Une vis d'alimentation d'extrudeuse (17) destinée à avancer et traiter des matières thermoplastiques, possédant un noyau s'étendant longitudinalement (21), ledit noyau (21) comprenant une spire hélicoïdale (22) pour définir une vis d'alimentation (17) destinée à avancer une matière depuis une partie arrière de celle-ci vers une partie avant de celle-ci, ladite vis d'alimentation (17) comprenant une section d'alimentation (A) à la partie arrière, une section de transition (B) dans une partie intermédiaire et une section de dosage (C) dans ladite partie avant, ladite section de dosage (C) de ladite vis d'alimentation (17) possédant une pluralité d'anneaux de cisaillement espacés axialement (25), tous lesdits anneaux de cisaillement (25) étant situés dans des plans qui sont normaux à l'axe de rotation de ladite vis d'alimentation (17), ladite vis d'alimentation (17) d'extrudeuse étant caractérisé en ce que, dans la section de transition (B), le diamètre de noyau de la vis d'alimentation (17) augmente uniformément vers l'extrémité aval de ladite section de transition, ladite spire (22) étant d'un premier pas constant dans lesdites sections d'alimentation (A) et de transition (B) et d'un deuxième pas constant dans ladite section de dosage (C), ledit deuxième pas constant étant inférieur audit premier pas constant, et ne ce que le rapport de la profondeur de la spire de vis (22) de ladite section de dosage (C) au diamètre de ladite vis d'alimentation (17) est dans la plage comprise entre 0,07 et 0,09:1.

7. Une vis d'alimentation d'extrusion selon la revendication 6, dans laquelle chacun desdits anneaux de cisaillement (25) comporte une pluralité de broches espacées circonférentiellement (26) s'étendant radialement vers l'extérieur à partir de ladite vis d'alimentation (17).

8. Une vis d'alimentation d'extrusion selon les revendications 6 et 7, dans laquelle ledit deuxième pas constant est dans la plage comprise entre 62,2 et 81,3 mm (2,45 et 3,20 pouces), et ledit premier pas constant dans la plage comprise entre 81,3 et 91,4 mm (3,20 et 3,60 pouces).

9. Une vis d'alimentation d'extrusion selon les revendications 6 à 8, dans laquelle la profondeur d'un canal défini par la spire (22) de ladite section de dosage (C) est dans une plage compris entre 6,86 et 8,13 mm (0,27 et 0,32 pouces) et le diamètre de ladite vis d'alimentation (17) est de 88,9 mm (3,5 pouces).

FIG. 1

FIG. 2

# FIG. 3

8.89 cm (3½")DIA. SINGLE FLIGHT SCREW